# EUROPEAN PATENT APPLICATION

(11) **EP 3 141 789 A2**
(43) Date of publication of application: **15.03.2017**
(21) Application number: 16001947.7
(22) Date of filing: 07.09.2016
(51) Int. Cl.: F16L 27/04, F16L 27/053, F16L 27/06, F16L 27/073

(54) **LIVE LOAD PIPE BALL JOINT**

(30) Priority: 10.09.2015 US 201514850169
(71) Applicant: Freudenberg Oil & Gas, LLC, Houston TX Texas 77040 (US)
(72) Inventor: Williams, Steven, Burlington, L7R 1V2 (CA); Marincic, Anton, Beamsville, L0R 1B7 (CA); Milanovic, Zvonko, Kirkland, H9J 3Z3 (CA); Burton, Ronald Mark, Caledonia, N3W 2N8 (CA); Payvar, Reza, Ancaster, L9K 1H8 (CA)
(74) Representative: Ripper, Monika Sigrid

(57) **Abstract**

A pipe ball joint, comprising: a casing (12) having a socket portion (14) with a substantially spherical interior surface (38), the socket portion (14); a ball pipe section (22) including a ball segment received in the socket portion (14); a seal (28) received in an annular groove (20) of the socket portion (14) and disposed against the ball segment of the ball pipe section (22); a push ring (30) disposed against the seal (28); a spring (32) disposed against the push ring (30); and a retainer (34) secured to the casing (12) and disposed against the spring (32) for loading the spring (32) against the push ring (30).

## Description

### FIELD

The present disclosure relates to a ball joint pipe coupling for connecting misaligned pipes in fluid-tight communication.

### BACKGROUND

This section provides background information related to the present disclosure which is not necessarily prior art.

It is common in industries such as oil and gas production, asphalt loading, solar power plants, etc. to utilize a ball and socket-type dynamic joint to join to misaligned pipe ends where pipe movement cannot be avoided and/or therefore prevent the over stressing of pipe components. The dynamic motion of these joints, in combination with a high temperature environment can result in a decay of sealing performance over time. To combat this decay, manufactures typically employ a manual adjustment feature to re-establish original joint sealing performance.

### SUMMARY

This section provides a general summary of the disclosure, and is not a comprehensive disclosure of its full scope or all of its features.

The present disclosure provides a live loaded ball pipe joint design which accommodates for seal decay without the need for maintenance or adjustment. The live load pipe ball joint includes a casing having a socket portion with a substantially spherical interior surface and a first pipe segment extending from the socket portion. The socket portion has an annular groove disposed adjacent the partially spherical interior surface. A ball pipe section includes a ball segment received in the socket portion of the casing and a second pipe segment extending from the ball segment. A seal is received in the annular groove of the casing and is disposed against the ball segment of the ball pipe section. A push ring is disposed against the seal and a spring is disposed against the push ring. A retainer is secured to the casing encompassing the ball pipe, and is disposed against the spring for loading the spring against the push ring. The loaded spring accommodates for decay of the sealing components and automatically adjusts the position of the push ring as the sealing components decay.

Further areas of applicability will become apparent from the description provided herein. The description and specific examples in this summary are intended for purposes of illustration only and are not intended to limit the scope of the present disclosure.

### DRAWINGS

The drawings described herein are for illustrative purposes only of selected embodiments and not all possible implementations, and are not intended to limit the scope of the present disclosure.
Figure 1 is a cross-sectional view of the pipe ball joint according to the principles of the present disclosure; and
Figure 2 is a detailed cross-sectional view of the seal packing and spring device according to the principles of the present disclosure.

Corresponding reference numerals indicate corresponding parts throughout the several views of the drawings.

### DETAILED DESCRIPTION

Example embodiments will now be described more fully with reference to the accompanying drawings.

Example embodiments are provided so that this disclosure will be thorough, and will fully convey the scope to those who are skilled in the art. Numerous specific details are set forth such as examples of specific components, devices, and methods, to provide a thorough understanding of embodiments of the present disclosure. It will be apparent to those skilled in the art that specific details need not be employed, that example embodiments may be embodied in many different forms and that neither should be construed to limit the scope of the disclosure. In some example embodiments, well-known processes, well-known device structures, and well-known technologies are not described in detail.

The terminology used herein is for the purpose of describing particular example embodiments only and is not intended to be limiting. As used herein, the singular forms "a," "an," and "the" may be intended to include the plural forms as well, unless the context clearly indicates otherwise. The terms "comprises," "comprising," "including," and "having," are inclusive and therefore specify the presence of stated features, integers, steps, operations, elements, and/or components, but do not preclude the presence or addition of one or more other features, integers, steps, operations, elements, components, and/or groups thereof. The method steps, processes, and operations described herein are not to be construed as necessarily requiring their performance in the particular order discussed or illustrated, unless specifically identified as an order of performance. It is also to be understood that additional or alternative steps may be employed.

When an element or layer is referred to as being "on," "engaged to," "connected to," or "coupled to" another element or layer, it may be directly on, engaged, connected or coupled to the other element or layer, or intervening elements or layers may be present. In contrast, when an element is referred to as being "directly on," "directly engaged to," "directly connected to," or "directly coupled to" another element or layer, there may be no intervening elements or layers present. Other words used to describe the relationship between elements should be interpreted in a like fashion (e.g., "between" versus "directly between," "adjacent" versus "directly adjacent," etc.). As used herein, the term "and/or" includes any and all combinations of one or more of the associated listed items.

Spatially relative terms, such as "inner," "outer," "beneath," "below," "lower," "above," "upper," and the like, may be used herein for ease of description to describe one element or feature's relationship to another element(s) or feature(s) as illustrated in the figures. Spatially relative terms may be intended to encompass different orientations of the device in use or operation in addition to the orientation depicted in the figures. For example, if the device in the figures is turned over, elements described as "below" or "beneath" other elements or features would then be oriented "above" the other elements or features. Thus, the example term "below" can encompass both an orientation of above and below. The device may be otherwise oriented (rotated 90 degrees or at other orientations) and the spatially relative descriptors used herein interpreted accordingly.

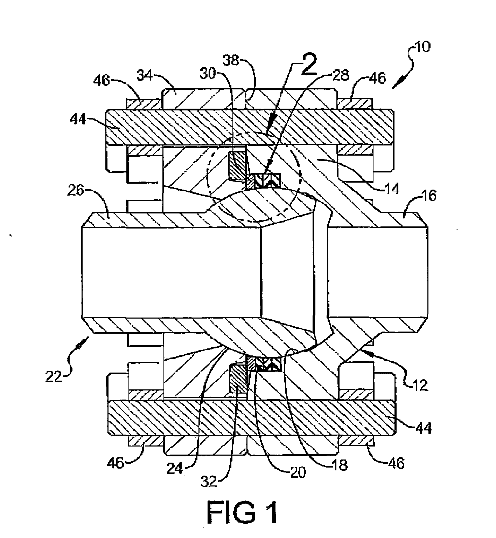

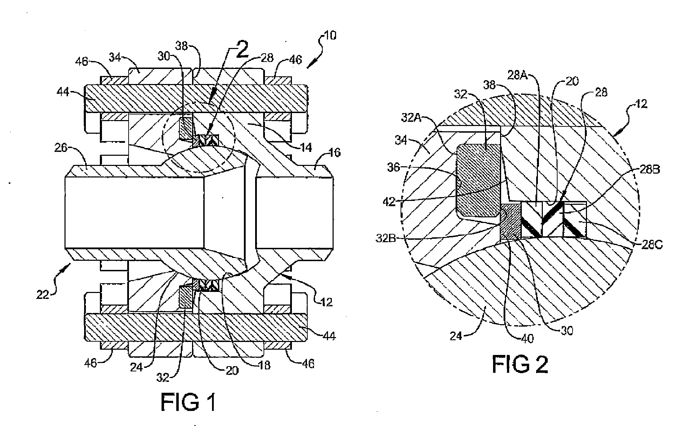

With reference to Figure 1, a live load pipe ball joint 10 according to the principles of the present disclosure will now be described. The live load pipe ball joint 10 includes a casing 12 having a socket portion14 and a pipe segment 16 extending from the socket portion 14. The socket portion 14 has an interior surface portion 18 that is substantially spherical. The socket portion 14 also includes an annular groove 20 disposed adjacent the substantially spherical interior surface portion 18. A ball pipe section 22 includes a substantially spherical ball-shaped segment 24 which is received in the partially spherical interior surface portion 18 of the socket portion 14 and a pipe segment 26 extending from the ball-shape segment 24.

A seal 28 is received in the annular groove 20 of the socket portion 14 and is disposed against the ball-shaped segment 24 of the ball pipe section 22. The seal 28 can include a packing of multiple seal elements 28A-C, as best shown in Figure 2. A push ring 30 is disposed against the seal 28. One or more springs 32 are disposed against the push ring 30 and a retainer 34 is secured to the casing 12 and disposed against the spring 32 for loading the spring 32 against the push ring 30 and retains the ball pipe section within the socket portion 14.

The spring(s) 32 is (are) preferably a Belleville spring although other springs such as helical springs can also be utilized. The retainer 34 can include an annular groove 36 disposed in a face 38 that opposes the casing 12. The spring 32 can be received in the annular groove 36. In the embodiment shown, a radially outer portion 32A of the Belleville spring 32 is disposed against a bottom of the annular groove 36 of the retainer 34 and a radially inner portion 32B of the Belleville spring 32 is disposed against the push ring 30. The retainer 34 can also include a rest surface 40 radially inward of the annular groove 36. The rest surface 40 can oppose the push ring 30. The casing 12 can also include a relief surface 42 disposed radially outward of the annular groove 20 of the casing 12 and opposing the spring 32. The relief surface 42 can be tapered to accommodate the unloading of the flattened out Belleville spring 32 as it expands to accommodate for decay of the seal 28 over time.

The live load pipe ball joint 10 is assembled by placing the seal 28 within the casing 12. The ball pipe section 22 is then inserted into the casing 12 and the push ring 30 is placed on top of the seal packing 28. The retainer 34 and Belleville spring 32 are then installed on top and the entire assembly is pressed together in a hydraulic press. Retainer 34 is secured to the casing 12 and a plurality of studs 44 and nuts 46 are installed and torqued to specified values. The press provides enough force to form the packing 28 around the ball-shape segment 24. As the seal packing 28 is formed, it becomes more dense. The seal 28 compresses to a point until it is dense enough to be stronger than the Belleville spring 32. At this point, the seal 28 no longer compresses and it is instead the Belleville spring 32 that begins loading. As the Belleville spring 32 is loaded, it tends to flatten out. The Belleville spring 32 should be designed for the specific packing and to provide a load which creates a stored energy that is later used when the packing wears or consolidates. Accordingly, the unloading of the Belleville spring 32 accommodates for the wear of the packing over time so that no additional maintenance or adjustment is necessary.

The foregoing description of the embodiments has been provided for purposes of illustration and description. It is not intended to be exhaustive or to limit the disclosure. Individual elements or features of a particular embodiment are generally not limited to that particular embodiment, but, where applicable, are interchangeable and can be used in a selected embodiment, even if not specifically shown or described. The same may also be varied in many ways. Such variations are not to be regarded as a departure from the disclosure, and all such modifications are intended to be included within the scope of the disclosure.

## Claims

1. A pipe ball joint, comprising:
a casing having a socket portion with a substantially spherical interior surface, the socket portion;
a ball pipe section including a ball segment received in the socket portion;
a seal received in an annular groove of the socket portion and disposed against the ball segment of the ball pipe section;
a push ring disposed against the seal;
a spring disposed against the push ring; and
a retainer secured to the casing and disposed against the spring for loading the spring against the push ring.

2. The pipe ball joint according to claim 1, wherein said spring is a Belleville spring.

3. The pipe ball joint according to claim 2, wherein a radially outer portion of the Belleville spring is disposed against the retainer and a radially inner portion of the Belleville spring is disposed against the push ring.

4. The pipe ball joint according to claim 1, wherein said retainer includes a face that opposes the casing and an annular groove disposed in the face, the spring being received in the annular groove in the retainer.

5. The pipe ball joint according to claim 4, wherein the retainer includes a rest surface radially inward of the annular groove that opposes the push ring.

6. The pipe ball joint according to claim 1, wherein the seal includes a packing of multiple seal elements.

7. The pipe ball joint according to claim 1, wherein the casing includes a relief surface disposed radially outward of the annular groove of the casing and opposing the spring.

8. The pipe ball joint according to claim 7, wherein the relief surface is tapered.

9. A pipe ball joint, comprising:
a casing having a socket portion with a substantially spherical interior surface and a first pipe segment extending from the socket portion, the socket portion having an annular groove disposed adjacent the partially spherical interior surface;
a ball pipe section including a ball segment received in the socket portion and a second pipe segment extending from the ball segment;
a seal received in the annular groove of the socket portion and disposed against the ball segment of the ball pipe section;
a push ring disposed against the seal;
a spring disposed against the push ring; and
a retainer secured to the casing and disposed against the spring for loading the spring against the push ring.

10. The pipe ball joint according to claim 9, wherein said spring is a Belleville spring.

11. The pipe ball joint according to claim 10, wherein a radially outer portion of the Belleville spring is disposed against the retainer and a radially inner portion of the Belleville spring is disposed against the push ring.

12. The pipe ball joint according to claim 1, wherein said retainer includes a face that opposes the casing and an annular groove disposed in the face, the spring being received in the annular groove in the retainer.

13. The pipe ball joint according to claim 12, wherein the retainer includes a rest surface radially inward of the annular groove that opposes the push ring.

14. The pipe ball joint according to claim 9, wherein the seal includes a packing of multiple seal elements.

15. The pipe ball joint according to claim 9, wherein the casing includes a relief surface disposed radially outward of the annular groove of the casing and opposing the spring.

16. The pipe ball joint according to claim 15, wherein the relief surface is tapered.
